# EUROPEAN PATENT SPECIFICATION

(11) **EP 3 398 697 B1**
(45) Date of publication and mention of the grant of the patent: **08.09.2021**
(21) Application number: 18167443.3
(22) Date of filing: 16.04.2018
(51) Int. Cl.: B21C 47/24, B21B 39/00

(54) **TRANSPORT PALLET**
TRANSPORTPALETTE
PALETTE DE TRANSPORT

(30) Priority: 28.04.2017 JP 2017090518
(43) Date of publication of application: 07.11.2018
(73) Proprietor: Primetals Technologies Japan, Ltd., Hiroshima 733-8553 (JP)
(72) Inventor: TANIGUCHI, Hiroyuki, Hiroshima-shi, Hiroshima 733-8553 (JP); NAKAGAWA, Tadashi, Hiroshima-shi, Hiroshima 733-8553 (JP)
(74) Representative: Strehl Schübel-Hopf & Partner

(56) References cited:
- CN-A- 102 815 491
- JP-A- 2006 198 681
- KR-A- 20170 075 415
- US-A- 3 658 011

## Description

### BACKGROUND OF THE DISCLOSURE

The present disclosure relates to a transport pallet which is used for transporting an object to be transported and travels on a plurality of transport rollers.

### PRIOR ART

An object to be transported, particularly a hot rolled coil produced by coiling a hot rolled metal strip on a reel for coiler, is a heavy product and has a large heat capacity since the hot rolled coil was formed by coiling a hot rolled steel strip which still has a high temperature of 500°C or higher into a coil form. Therefore, even if the hot rolled coil is left in the atmosphere, the coil does not cool easily and requires a long time to be cooled down to room temperature. The hot rolled coil is usually conveyed to a storage place called a coil yard.

As a conventional method of conveying a hot rolled coil, a method uses a transport pallet including a saddle member and a skid member, mounts a hot rolled coil on the saddle member of the transport pallet and transports the transport pallet on which the hot rolled coil is mounted by causing the transport pallet to travel on a plurality of transport rollers aligned and arranged at intervals along one direction (the travelling direction of the transport pallet).

In the case of transporting a hot rolled coil by the above method, since the hot rolled coil is a high-temperature object to be transported, both ends of the runners of the skid member in the longitudinal direction are likely to thermally deform downward due to radiant heat emitted from the outer surface of the hot rolled coil. As a result, the runners as a whole tend to have an upwardly convex curve, and if the transport pallet travels in such a state where the runners are curved, the front ends of the runners may collide with the transport roller located ahead in the travelling direction and prevent stable traveling.

For example, Japanese Patent Application Laid-Open No. 2006-198681, which discloses a system according to the preamble of claim 1, is cited as a conventional technique that improved a transport pallet configured to transport a high-temperature hot rolled coil. Japanese Patent Application Laid-Open No. 2006-198681 describes a device (transport pallet) including a loading platform configured to transport a high-temperature metal strip bundle (hot rolled coil). The loading platform is formed with a contour forming part configured to compensate for deformation in a vertical direction and a lateral direction calculated in advance under the influences of load and heat, in at least a longitudinal support (runner). More specifically, the contour forming part is configured such that the travel surface (lower surface) of the longitudinal support (runner) has, on the front end portion side, an inclined face rising up at an angle α with respect to a conveying line of rollers, and the contour forming part of the longitudinal support (runner) is formed so that even if the longitudinal support (runner) has an upwardly convex curve due to thermal deformation, the travel surface (lower surface) does not deform to the lower side of the conveying line.

However, the device (transport pallet) described in Japanese Patent Application Laid-Open No. 2006-198681 was developed with the main purpose of improving travel performance when thermal deformation occurs in the runners of the transport pallet by forming inclined faces at both ends of the runners, and therefore, for example, when thermal deformation does not occur in the runners of the transport pallet like the case when transporting a cold-rolled coil or a hot rolled coil which has already been cooled to a low temperature, or when causing an empty transport pallet after a transport to travel to the original position, the travel performance of the device is poor, compared to a conventional transport pallet with runners having no inclined faces, because the length of the flat lower surfaces of the runners that come into contact with the transport rollers is shorter due to the formation of the inclined faces on the runners.

### SUMMARY OF THE DISCLOSURE

The present solves the problem of providing system including a transport pallet capable of stably travelling on transport rollers by optimizing the structure of the transport pallet so that runners are deformed in a downwardly convex curve with the weight, etc. of a mounted object to be transported and effectively reducing an upwardly convex curve (thermal deformation) of the runners, which tends to occur particularly when transporting an object to be transported in a high temperature condition such as a hot rolled coil, without forming inclined faces on the lower surfaces of end portions of the runners. The problem is solved by a system according to claim 1.

In accordance with one aspect of the present disclosure, a saddle member on which an object to be transported is mounted; and a skid member traveling integrally with the saddle member on a plurality of transport rollers located below the saddle member and aligned and arranged in parallel at a predetermined arrangement pitch, wherein the skid member is composed of two divided skids juxtaposed one behind the other in a transport direction, each divided skid includes a runner extending continuously in a straight line in forward and backward directions of transport and having a lower surface that comes into contact with the transport rollers, the saddle member has, at four positions, front and rear on both the left and right sides on a lower surface, load transmission parts configured to transmit a load acting on the saddle member to the skid member, the front load transmission parts being disposed on the front divided skid, the rear load transmission parts being disposed on the rear divided skid, each of the divided skids has a load support member configured to support the load transmitted from the load transmission part, and a recessed portion formed at a position on the lower surface of the runner corresponding to the load support member, and extending dimensions of two lower surface portions of the runner separated front and rear by the recessed portion are both larger than the arrangement pitch of the plurality of transport rollers.

The transport pallet of the present disclosure effectively reduces an upwardly convex curve (thermal deformation) of the runners, which tends to occur particularly when transporting an object to be transported in a high temperature condition, such as a hot rolled coil, without forming inclined faces on the lower surfaces of the ends of the runners, and thus the transport pallet can stably travel on the transport rollers.

### BRIEF DESCRIPTION OF THE DRAWINGS

Fig. 1 is a schematic side view of a transport pallet of an embodiment according to the present disclosure;
Fig. 2 is a schematic front view of the transport pallet illustrated in Fig. 1;
Fig. 3A is a schematic plan view of the transport pallet illustrated in Fig. 1;
Fig. 3B is a schematic plan view of a skid member when a saddle member is removed from the transport pallet illustrated in Fig. 3A;
Fig. 4 is a partially enlarged view for explaining the relationship between an extending dimension B of two lower surface portions of the runners of divided skids constituting the transport pallet illustrated in Fig. 1 and an arrangement pitch A between the transport rollers;
Figs. 5A and 5B illustrate the positional relationships among load transmission parts provided on the saddle member, load support members provided at the mount parts of the divided skids, and recessed portions provided at the lower surface positions of the runners, Fig. 5A being an enlarged view of a portion enclosed by a circled area I illustrated in Fig. 1, Fig. 5B being a V-V sectional view of Fig. 5A;
Fig. 6 is an exploded perspective view of the load transmission part and the load support member of the transport pallet illustrated in Fig. 1; and
Fig. 7 is an enlarged view of a portion enclosed by a circled area II illustrated in Fig. 2.

### DETAILED DESCRIPTION OF DIFFERENT EMBODIMENTS OF THE DISCLOSURE

Next, an embodiment of a transport pallet according to the present disclosure will be described below with reference to the accompanying drawings.

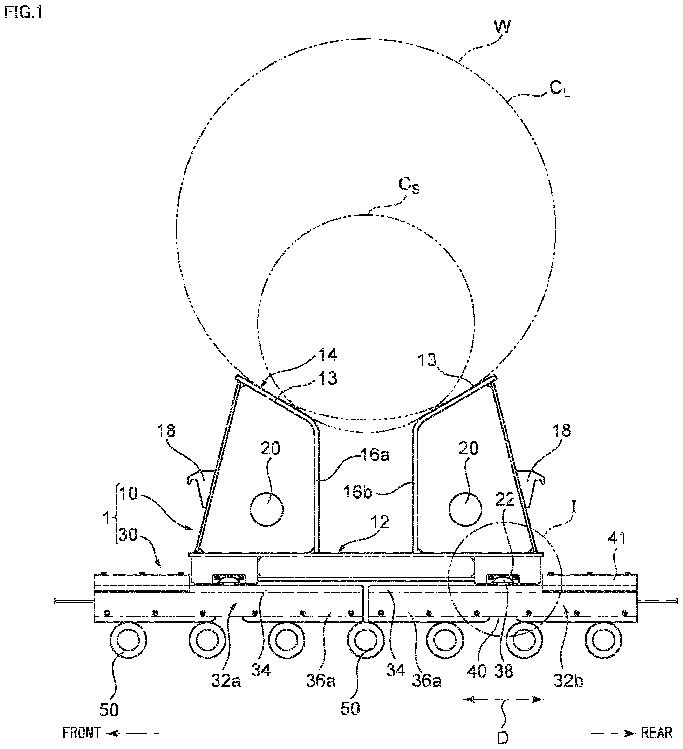

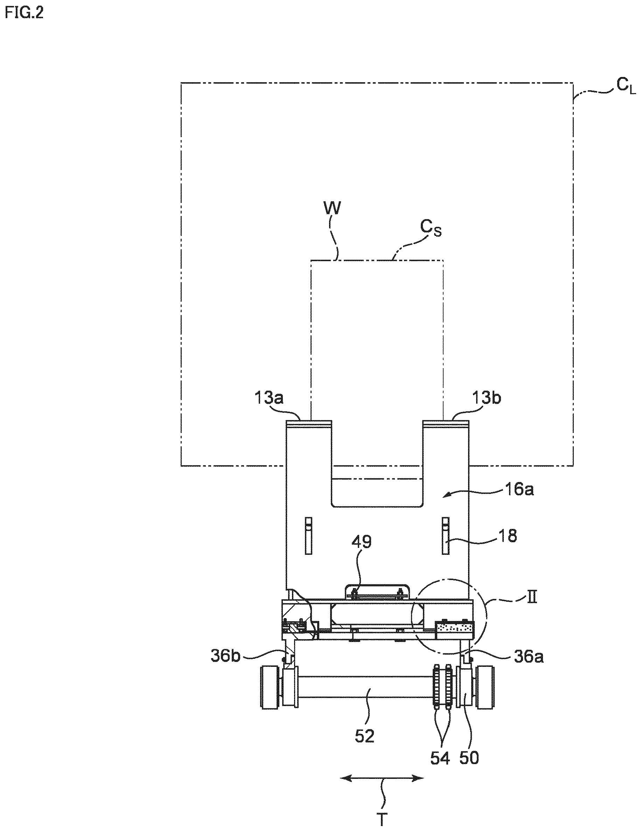

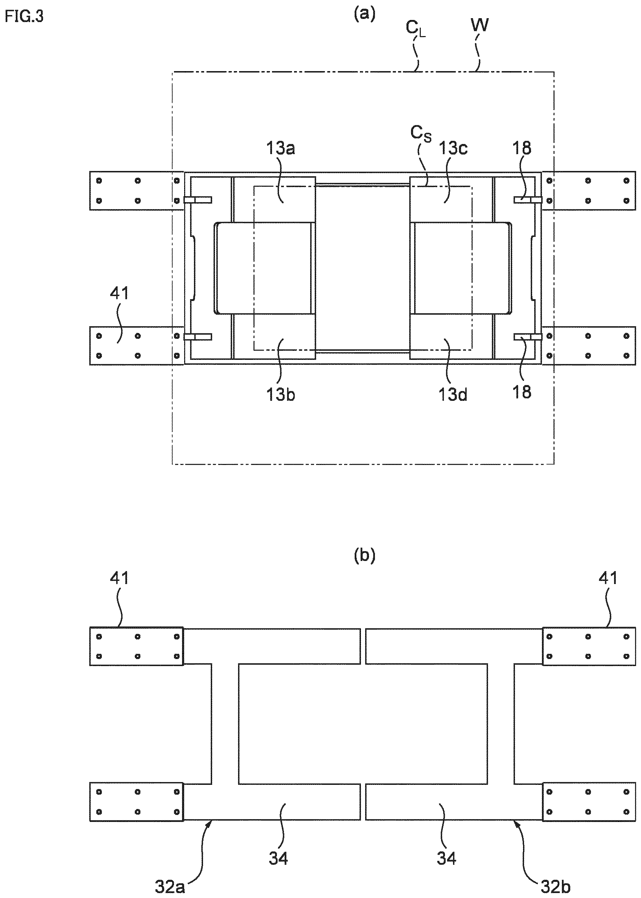

Fig. 1, Fig. 2 and Fig. 3A illustrate an example of a transport pallet according to a representative embodiment of the present disclosure. Fig. 1 is a schematic side view, Fig. 2 is a schematic front view, and Fig. 3A is a schematic plan view. In Fig. 1, reference numeral 1 denotes a transport pallet, 10 denotes a saddle member, 30 denotes a skid member, and 50 denotes a transport roller.

The illustrated transport pallet 1 is used for transporting an object to be transported, for example, a hot rolled coil W in a high temperature condition of 500°C or higher, and is configured to travel on a plurality of transport rollers 50 aligned and arranged in parallel. Two circles C_{L} and C_{S} indicated by the two-dot-and-dash lines in Fig. 1 are illustrated so that the circle C_{L} shows an example of the outer contour shape of a object W to be transported with a large coil diameter when the object W to be transported is mounted and the circle C_{S} shows an example of the outer contour shape of a object W to be transported with a small coil diameter when the object W to be transported is mounted.

In the present embodiment, as a driving mechanism for the transport rollers 50, such a configuration is adopted that a chain (not shown) is wrapped around a sprocket 54 attached to a rotating shaft 52 as illustrated in Fig. 2, and the chain is interlocked with rotation of a drive motor (not shown) to rotationally drive the rotating shaft 52 and transport rollers, but the present disclosure is not limited to such a configuration as long as the transport rollers 50 are configured to be rotationally driven.

The transport pallet 1 illustrated in Fig. 1 is composed mainly of the saddle member 10 and the skid member 30.

The saddle member 10 constitutes a part of the transport pallet 1 configured to mount the object W to be transported, and includes a lower structure 12 positioned and mounted on the skid member 30, and an upper structure 14 integrally coupled to an upper part of the lower structure 12 and having a support bearing surface 13 on which the object W to be transported is mounted.

In the illustrated embodiment, the upper structure 14 is configured as a pair of box-like bodies 16a, 16b arranged one behind the other at an interval in a transport direction D of the transport pallet 1. The support bearing surface 13 of the upper structure 14 is constituted by a total of four support bearing surface portions 13a to 13d by further splitting each of the support bearing surfaces 13 on the box-like bodies 16a, 16b into two support bearing surface portions 13a, 13band 13c, 13d, and arranging the respective two support bearing surface portions 13a, 13band 13c, 13d, also at an interval in a direction T (the left-right direction in Fig. 2) orthogonal to the transport direction D (See Fig. 3A).

The four support bearing surface portions 13a to 13d preferably have an outer contour shape and an inclination angle capable of mounting and transporting an object W of various coil size to be transported. Additionally, it is preferable to arrange the four support bearing surface portions 13a to 13d so that the load of the weight of the object W to be transported is equally distributed with respect to the four support bearing surface portions 13a to 13d.

Further, the embodiment of Fig. 1 illustrates a case where a hook part 18 configured to lift the transport pallet 1 by a crane, etc. (not shown) is formed at each of two right and left positions on the front face and the rear face of the upper structure 14. However, it is possible to form the hook parts 18 at other positions as long as the hook parts 18 are capable of lifting the transport pallet 1.

In addition, when a hot rolled coil W in a high-temperature condition is mounted on the box-like bodies 16a, 16b, the support bearing surfaces 13 of the box-like bodies 16a, 16b are heated by the mounted hot rolled coil W and the air inside the box-like bodies 16a and 16b is also heated, and consequently the heat of the box-like bodies 16a and 16b is less likely to escape. Therefore, Fig. 1 illustrates the adoption of a configuration where through holes 20 are formed in left and right side plates constituting the box-like bodies 16a, 16b to allow exchange of heated air inside the box-like bodies 16a, 16b with outside air and facilitate dissipation of heat. However, the present disclosure is not limited to such a configuration and the through holes 20 can be appropriately provided according to requirements.

The skid member 30 is composed of two divided skids 32a, 32b juxtaposed one behind the other in the transport direction D. Each of the divided skids 32a, 32b is constructed mainly of a mount part 34 and a pair of runners 36a, 36b. The saddle member 10 and the skid member 30 can travel integrally when traveling on the transport rollers 50.

As illustrated in Fig. 3B, the mount part 34 of each of the divided skids 32a, 32b has an upper surface on which the saddle member 10 is positioned and mounted, and is formed of a flat plate having a substantially H shape when viewed from the upper surface. Both of the left and right side portions are disposed on the upper surfaces of the runners 36a, 36b, respectively, and load support members 38 are provided at both end positions of a joint portion joining the mid positions of both side portions. The mount parts 34 are provided to facilitate the installation of the load support members 38, a coupling member 49 described later and a thermal insulation material 43 described later on the runners 36a, 36b.

In the present embodiment, the saddle member 10 is simply positioned and mounted on the mount parts 34 of the divided skids 32a, 32b constituting the skid member 30, and a configuration in which the saddle member 10 and the skid member 30 are tightly fastened and fixedly coupled by coupling members such as bolts is not adopted. Consequently, even if a height difference is present between the transport rollers 50, 50 in the traveling direction D of the transport pallet 1, the divided skids 32a, 32b constituting the skid member 30 can move independently of the saddle member 10 as the divided skids 32a, 32b and the saddle member 10 are not fixedly coupled. As a result, while keeping the saddle member 10 in a substantially horizontal state, the transport pallet 1 can move only the divided skids 32a, 32b to incline forward and backward, respectively, so as to absorb the height difference between the transport rollers 50, 50.

A pair of runners 36a, 36b extends continuously straight in the forward and backward directions at both left and right side positions under the mount parts 34, and has lower surfaces in contact with the transport rollers 50.

The saddle member 10 has load transmission parts 22 configured to transmit the load acting on the saddle member 10 to the skid member 30 at four positions, front and rear on left and right sides, on the lower surface, preferably at four positions on the lower surface so that the front and rear positional relationship and the left and right positional relationship are both line symmetrical, that is, the four corners in Fig. 1. Note that the load transmission parts 22 need to be provided at four positions, front and rear on left and right sides, on the lower surface of the saddle member 10, and it is not necessary to strictly set each of the front and rear positional relationship and the left and right positional relationship to be line symmetry and it is possible to appropriately change the arrangement positions of the load transmission parts 22 by taking the weight balance acting on the saddle member 10 into consideration.

The divided skids 32a, 32b are provided with load support members 38 configured to support the load transmitted from the load transmission parts 22 at positions on the upper surfaces of the mount parts 34 corresponding to the approximate center of the runners 36a, 36b in the extending direction. In the present embodiment, the saddle member 10 is positioned and mounted on the upper surfaces of the divided skids 32a, 32b constituting the skid member 30 according to the contact condition between the load transmission parts 22 and the load support members 38. Whereas the portion of the lower surface of the saddle member 10 excluding the load transmission parts 22 is arranged to not be in contact with the upper surface of the skid member 30 so that the saddle member 10 floats upward by a certain distance. The reason for adopting this configuration is to concentrate the weights of the object W to be transported and the saddle member 10 on the four load transmission parts 22 mounted to the saddle member 10 and the four load support members 38 of the divided skids 32a and 32b and also to allow the divided skids 32a and 32b (particularly the runners 36a, 36b) to incline in forward and backward directions independently of the saddle member 10.

In addition, each of the runners 36a, 36b has a recessed portion 40 at a position in the lower surface corresponding to the load support member 38 (the position vertically below the load support member 38).

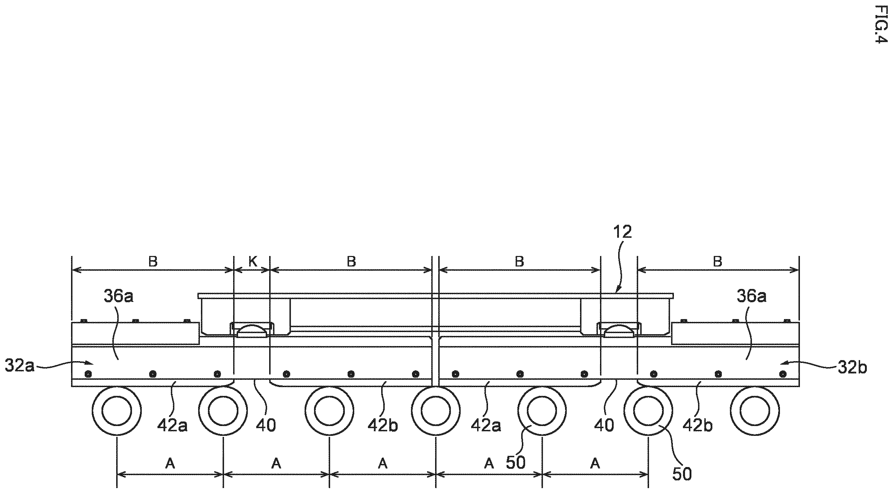

Further, in the present embodiment, as illustrated in Fig. 4, each of the runners 36a, 36b is configured so that the extending dimensions B of two lower surface portions 42a, 42b of the runners 36a, 36b separated front and rear by the recessed portion 40are larger than the arrangement pitch A between the transport rollers 50, 50. The recessed portion 40 is interposed between the two lower surface portions 42a, 42b. Consequently, when the transport pallet 1 travels, one or more transport rollers 50 are always positioned on the two lower surface portions 42a, 42b of the runners 36a, 36b, respectively, while the transport rollers 50 are not in contact with the recessed portion 40 of each of runners 36a, 36b, thereby allowing the runners 36a, 36b as a whole to easily take a downwardly convex curve shape (the front of the runner 36a goes up, as does the rear of the runner 36b). By adopting such a configuration, it is possible to cancel out a curve (thermal deformation) of the runners 36a, 36b in the upwardly convex shape (the front of the runner 36a goes down and the rear of the runner 36b goes down), which tends to occur when transporting the object W to be transported in a high temperature condition such as a hot rolled coil, and consequently the transport pallet 1 can stably travel on the transport rollers 50. Further, since the transport pallet 1 according to the present embodiment can be formed with a flat surface without forming inclined faces on the lower surfaces of the ends of the runners 36a, 36b as in Japanese Patent Application Laid-Open No. 2006-198681, the transport pallet 1 on the transport rollers 50 can always travel stably even when transporting an already-cooled object W with the transport pallet 1, or when returning the empty transport pallet 1 to the original position. Note that the transport pallet 1 of the present embodiment is configured so that a length K of the recessed portion 40 provided in the runners 36a, 36b in the extending direction of the runners is shorter than the predetermined pitch A of the transport rollers 50.

In the transport pallet 1 according to the present embodiment, the skid member 30 is composed of two divided skids 32a, 32b, and the runners 36a, 36b are divided into two, front and rear, in the traveling direction D of the transport pallet 1. Therefore, as compared to a transport pallet having a skid member constructed of one left runner and one right runner without being divided, the two left and two right runners 36a, 36a, 36b, 36b are deformed by the weight of the object W to be transported, etc. in the recessed portion 40 located at the lower position corresponding to each of the four load support members 38 to which the load acts, and readily take a downwardly convex curve shape. Furthermore, since the saddle member 10 is just positioned and mounted on the mount parts 34 of the divided skids 32a, 32b constituting the skid member 30 and is not actually fixedly coupled so that the divided skids 32a, 32b (particularly the runners 36a and 36b) can deform independently of the saddle member 10, it is possible to allow each of the runners 36a and 36b to more remarkably form the above-described downwardly convex curve shape.

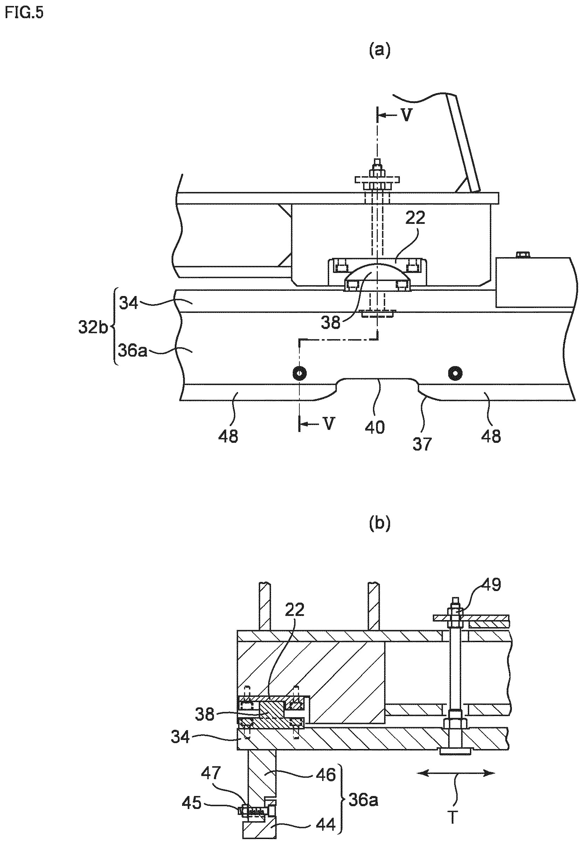

As illustrated in Fig. 5A, the load support member 38 is formed as a semi-cylindrical convex part extending in the left-right direction T of the transport pallet 1, and the load transmission part 22 is formed as a concave part having a semi-cylindrical inner surface of a shape corresponding to a semi-cylindrical outer surface of the convex part of the load support member 38, and the cylindrical outer surface of the convex part of the load support member 38 and the semi-cylindrical inner surface of the concave part of the load transmission part 22 are preferably configured to be capable of sliding relatively in the front-back direction D of the transport pallet 1 while keeping the mutually opposed relationship. Consequently, even if there is a difference in height between the transport rollers 50, 50, the runners 36a, 36b of the respective divided skids 32a, 32b incline forward and backward to individually follow and absorb the height difference, and thus the transport pallet 1 can travel smoothly. Moreover, since the load transmission parts 22 and the load support members 38 are not fixedly coupled to each other but are in surface contact with each other when mounted, it is possible to prevent concentration of the load of the object to be transported and the load of the saddle member as stress on fastening members as in a transport pallet having a configuration in which the load transmission parts and the load support members are fixedly coupled with fastening members such as support pins, thereby avoiding breakage.

As illustrated in Figs. 5A and 5B, in the present embodiment, the load support member 38 is formed as the convex part and the load transmission part 22 is formed as the concave part, but it is possible to form in the opposite fashion the load support member 38 as the concave part and the load transmission part 22 as the convex part.

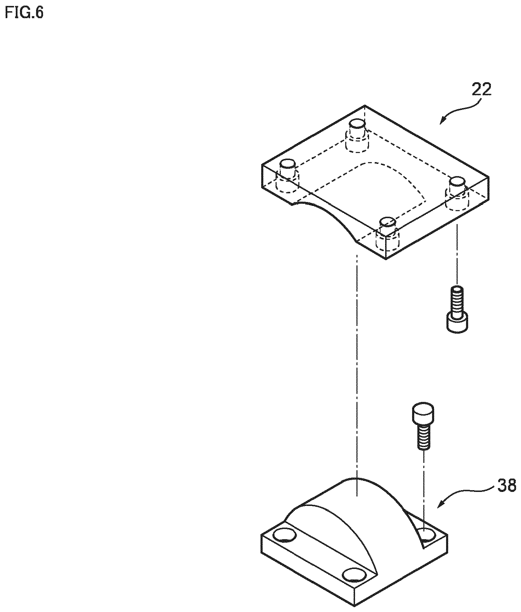

Moreover, as illustrated in Fig. 6, the load transmission part 22 and the load support member 38 are preferably formed as separate replaceable members. Since the configuration in which the load transmission parts 22 and the load support members 38 slide and move in surface contact with each other when the load of the object W to be transported and the saddle member 10 is applied is adopted in the present embodiment, portions of the load transmission parts 22 and the load support members 38 which are in surface contact are likely to be damaged due to abrasion, etc. Therefore, by configuring the load transmission parts 22 and the load support members 38 as separate replaceable members, it is possible to prolong the service life of the saddle member 10 and the divided skids 32a, 32b.

Further, it is preferable to construct the lower surface portions of the runners 36a, 36b by replaceable liner members 44 as illustrated in Figs. 5A and 5B. The lower surface portions of the runners 36a, 36b are portions that are in contact with the transport rollers 50 and are likely to wear. Therefore, by constructing the lower surface portions of the runners 36a, 36b by the replaceable liner members 44, the service life of the divided skids 32a, 32b can be prolonged. In addition, the liner members 44 can be made of a hard material as hard as the transport rollers 50, and the main bodies 46 of the runners 36a, 36b to which the liner members 44 are attached can be made of a material softer than the liner members 44. If this configuration is adopted, the recessed portion 40 of each of the runners 36a, 36b of the divided skids 32a, 32b deform downward more easily and the liner members 44 as the lower surface portions of the runners 36a, 36b are hard, and thus it is possible to provide the structure with resistance to abrasion.

Furthermore, if the liner member 44 is composed of two divided liners 48, 48 divided and arranged front and rear in the extending direction of the lower surface portions of the runners 36a, 36b, excluding the middle position, it is possible to easily form the recessed portion 40 and set the cross sectional thickness of the runners 36a, 36b to be thin so as to facilitate downward deformation at the position of the recessed portion 40. Note that, in Fig. 5, although the main body 46 of the runner 36a or 36b and the liner member 44 are coupled by threaded coupling of the bolt 45 and the nut 47, it is possible to use another coupling means.

It is preferable that the transport pallet 1 further includes a coupling member 49 such as a bolt configured to loosely couple the saddle member 10 and the skid member 30 together so that when the saddle member 10 is lifted using a crane, etc., the saddle member 10 and the skid member 30 are integrally lifted with a space between the saddle member 10 and the skid member 30. In this case, when transporting the object W to be transported by the transport pallet 1, the saddle member 10 is substantially integrated with the skid member 30 while being mounted on the skid member 30, without being substantially fixed to the skid member 30, in a state in which the load transmission parts 22 and the load support members 38 are in surface contact with each other, and therefore the runners 36a, 36b of the skid member 30 can absorb height differences of the transport rollers 50 by inclining in forward and backward directions independently of the saddle member 10. On the other hand, when the saddle member 10 is lifted, the transport pallet 1 can be lifted integrally with the saddle member 10 and the skid member 30 with a space between them.

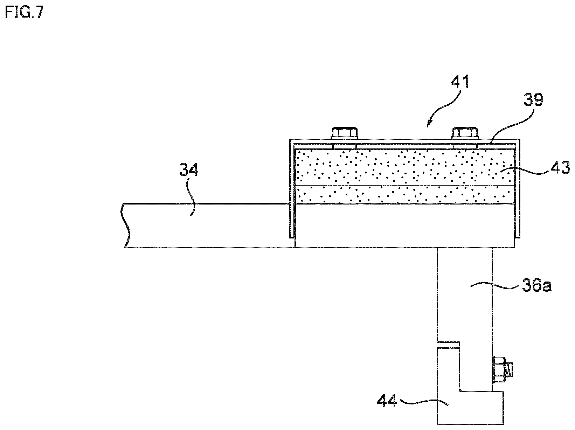

The mount parts 34 and the runners 36a, 36b constituting the respective two divided skids 32a, 32b have four extended portions 41 extending from both the left and right sides of the skid member 30. It is preferable to provide, on the upper surfaces of the extended portions 41, a thermal insulation material 43 such as a ceramic fiber blanket containing, for example, alumina or silica as a main component. This makes it possible to reduce the thermal deformation of the runners 36a, 36b positioned at the extended portions 41 against radiant heat emitted from the outer surface of the object W to be transported, such as a hot rolled coil, mounted in a high temperature condition, thereby realizing further stable travelling. Fig. 7 illustrates an example in which not only the thermal insulation material 43 is disposed on the upper surface of the extended portion 41, but also a stainless steel cover 39 is further provided to cover the outer surface of the thermal insulation material 43.

As illustrated in Fig. 5A, it is preferable that chamfers 37 are formed at both end edges in the recessed portion 40 of the runners 36a, 36b. In the present disclosure, since a configuration in which the divided skids 32a, 32b are displaced downward at the positions of the load support members 38 and the runners 36a, 36b as a whole are likely to curve into a downwardly convex shape if both end edges in the recessed portion 40 are angular, as the runners 36a, 36b are curved, there is a possibility that both angular edges in the recessed portion 40 will strike the transport rollers 50 and prevent travelling. Therefore, by providing chamfers 37 on both end edges in the recessed portion 40, both end edges of the recessed portion 40 are less likely to strike the transport rollers 50, thereby allowing further more stable travelling.

It should be noted that the above description merely illustrates an example of the embodiment of the present disclosure, and various modifications can be made within the scope of the claims.

The transport pallet of the present disclosure effectively reduces an upwardly convex curve (thermal deformation) of the runners, which tends to occur particularly when transporting an object to be transported which is in a high temperature condition, such as a hot rolled coil, without forming inclined faces on the lower surfaces of the ends of the runners, and thus the transport pallet can stably travel on the transport rollers.

### LIST OF REFERENCE NUMERALS

- 1: transport pallet
- 10: saddle member
- 12: lower structure
- 13: support bearing surface
- 13a to 13d: support bearing surface portions
- 14: upper structure
- 16a, 16b: box-like bodies
- 18: hook part
- 20: through hole
- 22: load transmission part
- 30: skid member
- 32a, 32b: divided skids
- 34: mount part
- 36a, 36b: runners
- 37: chamfer
- 38: load support member
- 39: cover
- 40: recessed portion
- 41: extended portion
- 42a, 42b: lower surface portions of runners
- 43: thermal insulation material
- 44: liner member
- 45: bolt
- 46: main body of runner
- 47: nut
- 48: divided liner
- 49: coupling member
- 50: transport roller
- 52: rotating shaft
- 54: sprocket

## Claims

1. A transport pallet (1) for transporting an object (W) to be transported on a plurality of transport rollers (50) aligned and arranged in parallel at a predetermined arrangement pitch (A), said transport pallet (1) comprising:
a saddle member (10) on which the object (W) to be transported can be mounted; and
a skid member (30) configured to travel integrally with the saddle member (10) on the plurality of transport rollers (50) located in use below the saddle member (10), wherein
the skid member (30) is composed of two divided skids (32a, 32b) juxtaposed one behind the other in a transport direction,
each divided skid (32a, 32b) includes a runner (36a, 36b) extending continuously in a straight line in forward and backward directions of the transport and having a lower surface adapted to come into contact with the transport rollers (50),
the saddle member (10) has, at four positions, front and rear on both the left and right sides on a lower surface, load transmission parts (22) configured to transmit a load acting on the saddle member (10) to the skid member (30), the front load transmission parts (22) being disposed on the front divided skid (32a), the rear load transmission parts (22) being disposed on the rear divided skid (32b),
each of the divided skids (32a, 32b) has a load support member (38) configured to support the load transmitted from the load transmission part (22),
**characterized in that** a recessed portion (40) formed at a position on the lower surface of the runner (36a, 36b) corresponding to the load support member (38).

2. The transport pallet (1) as claimed in Claim 1, wherein one of the load transmission part (22) and the load support member (38) is formed as a semi-cylindrical convex part extending in left and right directions of the transport pallet (1), another is formed as a concave part having a semi-cylindrical inner surface of a shape corresponding to a semi-cylindrical outer surface of the convex part, and the semi-cylindrical outer surface of the convex part and the semi-cylindrical inner surface of the concave part are capable of sliding relatively in front and back directions of the transport pallet (1) while keeping a mutually opposed relationship.

3. The transport pallet (1) as claimed in Claim 1 or 2, wherein at least one of the load transmission part (22) and the load support member (38) is configured as a replaceable separate member.

4. The transport pallet (1) as claimed in Claim 1, 2 or 3, wherein the lower surface portion (42a, 42b) of the runner (36a, 36b) is formed of a replaceable liner member (44).

5. The transport pallet (1) as claimed in Claim 4, wherein the liner member (44) is composed of two divided liners (48) divided and arranged front and rear on the lower surface portion (42a, 42b) of the runner (36a, 36b), excluding the position of the recessed portion (40).

6. The transport pallet (1) as claimed in any one of Claims 1 to 5, wherein the transport pallet (1) further comprises a coupling member (49) configured to loosely couple the saddle member (10) and the skid member (30) together so that when the saddle member (10) is lifted, the saddle member (10) and the skid member (30) are integrally lifted with a space between the saddle member (10) and the skid member (30).

7. The transport pallet (1) as claimed in any one of Claims 1 to 6, wherein
the two divided skids (32a, 32b) further include four extended portions (41) that respectively protrude and extend from left and right sides of the skid member (30) and from front and rear ends of the saddle member (10), and
each of the extended portions (41) has a thermal insulation material (43) at least on an upper surface.

8. The transport pallet (1) as claimed in any one of Claims 1 to 7, wherein both end edges in the recessed portion (40) are chamfered.

9. System including a transport pallet (1) as claimed in any one of Claims 1 to 8 and said plurality of transport rollers (50) aligned and arranged in parallel at said predetermined arrangement pitch (A).

10. System according to claim 9, wherein extending dimensions of two lower surface portions (42a, 42b) of the runner (36a, 36b) separated front and rear by the recessed portion (40) are both larger than the arrangement pitch of the plurality of transport rollers (50).

## Patentansprüche

1. Transportpalette (1) zum Transportieren eines zu transportierenden Objekts (W) auf einer Vielzahl von Transportrollen (50), die ausgerichtet und in einem vorbestimmten Anordnungsabstand (A) parallel angeordnet sind, wobei die Transportpalette (1) umfasst:
ein Sattelelement (10), auf dem der zu transportierende Gegenstand (W) befestigt werden kann; und
ein Kufenelement (30), das so konfiguriert ist, dass es sich einstückig mit dem Sattelelement (10) auf der Vielzahl von Transportrollen (50) bewegt, die sich im Gebrauch unterhalb des Sattelelements (10) befinden, wobei
das Kufenelement (30) aus zwei geteilten Kufen (32a, 32b) zusammengesetzt ist, die in einer Transportrichtung hintereinander angeordnet sind,
jede geteilte Kufe (32a, 32b) eine Kufe (36a, 36b) umfasst, die sich stetig in einer geraden Linie in Vorwärts- und Rückwärtsrichtung des Transports erstreckt und eine Unterseite aufweist, die dazu ausgelegt ist, in Kontakt mit den Transportrollen (50) zu kommen,
wobei das Sattelelement (10) an vier Positionen, vorne und hinten, sowohl auf der linken als auch auf der rechten Seite auf einer Unterseite, Lastübertragungsteile (22) aufweist, die dazu ausgelegt sind, eine auf das Sattelelement (10) wirkende Last auf das Kufenelement (30) übertragen, wobei die vorderen Lastübertragungsteile (22) an der vorderen geteilten Kufe (32a) angeordnet sind, die hinteren Lastübertragungsteile (22) an der hinteren geteilten Kufe (32b) angeordnet sind,
jede der geteilten Kufen (32a, 32b) ein Lasttragelement (38) aufweist, das dazu ausgelegt ist, die von dem Lastübertragungsteil (22) übertragene Last zu tragen,
**dadurch gekennzeichnet, dass** ein an einer Position an der Unterseite der Kufe (36a, 36b), die dem Laststützelement (38) entspricht, Aussparungs-Abschnitt (40) ausgebildet ist.

2. Transportpalette (1) nach Anspruch 1, wobei eines von dem Lastübertragungsteil (22) und dem Lastträgerelement (38) als ein halbzylindrisches konvexes Teil ausgebildet ist, das sich in linker und rechter Richtung der Transportpalette (1) erstreckt, ein anderes als ein konkaves Teil mit einer halbzylindrischen Innenfläche mit einer Form, die einer halbzylindrischen Außenfläche des konvexen Teils entspricht, ausgebildet ist, und die halbzylindrische Außenfläche des konvexen Teils und die halbzylindrische Innenfläche des konkaven Teils in der Lage sind, relativ in vorderen und hinteren Richtungen der Transportpalette (1) zu gleiten, während sie eine einander gegenüber liegende Beziehung beibehalten.

3. Transportpalette (1) nach Anspruch 1 oder 2, wobei mindestens eines von dem Lastübertragungsteil (22) und dem Lasttragelement (38) als austauschbares separates Element ausgelegt ist.

4. Transportpalette (1) nach Anspruch 1, 2 oder 3, wobei der untere Flächenabschnitt (42a, 42b) der Kufe (36a, 36b) aus einem auswechselbaren Auskleidungselement (44) gebildet ist.

5. Transportpalette (1) nach Anspruch 4, wobei das Auskleidungselement (44) aus zwei geteilten Auskleidungen (48) besteht, die geteilt und vorne und hinten mit Ausnahme der Position des Aussparungs-Abschnitts (40) an der Unterseite (42a, 42b) der Kufe (36a, 36b) angeordnet sind.

6. Transportpalette (1) nach einem der Ansprüche 1 bis 5, wobei die Transportpalette (1) ferner ein Kopplungselement (49) umfasst, das so konfiguriert ist, dass es das Sattelelement (10) und das Kufenelement (30) lose miteinander koppelt, so dass, wenn das Sattelelement (10) angehoben wird, das Sattelelement (10) und das Kufenelement (30) einstückig mit einem Raum zwischen dem Sattelelement (10) und dem Kufenelement (30) angehoben werden.

7. Die Transportpalette (1) nach einem der Ansprüche 1 bis 6, wobei
die beiden geteilten Kufen (32a, 32b) ferner vier verlängerte Abschnitte (41) umfassen, die jeweils von linken und rechten Seiten des Kufenelements (30) und von vorderen und hinteren Enden des Sattelelements (10) vorstehen und sich erstrecken, und
jeder der verlängerten Abschnitte (41) zumindest an einer Oberseite ein thermisches Isolationsmaterial (43) aufweist.

8. Transportpalette (1) nach einem der Ansprüche 1 bis 7, wobei beide Endkanten im ausgesparten Abschnitt (40) abgeschrägt sind.

9. System mit einer Transportpalette (1) nach einem der Ansprüche 1 bis 8 und der Vielzahl von Transportrollen (50), die ausgerichtet und in dem vorgegebenen Anordnungsabstand (A) parallel angeordnet sind.

10. System nach Anspruch 9, wobei die Erstreckungsabmessungen von zwei unteren Oberflächenabschnitten (42a, 42b) der Kufe (36a, 36b), die vorne und hinten durch den Aussparungs-Abschnitt (40) getrennt sind, beide größer sind als der Anordnungsabstand der Vielzahl von Transportrollen (50).

## Revendications

1. Palette (1) de transport pour transporter un objet (W) devant être transporté sur une pluralité de cylindres (50) de transport alignés et agencés en parallèle à un pas (A) d'agencement prédéterminé, ladite palette (1) de transport comprenant :
un élément de berceau (10) sur lequel l'objet (W) devant être transporté peut être monté ; et
un élément de patin (30) configuré pour se déplacer de façon intégrée avec l'élément de berceau (10) sur la pluralité de cylindres (50) de transport situé à l'utilisation sous l'élément de berceau (10), dans laquelle
l'élément de patin (30) est composé de deux patins divisés (32a, 32b) juxtaposés l'un derrière l'autre dans un sens de transport,
chaque patin divisé (32a, 32b) inclut un longeron (36a, 36b) s'étendant de façon continue sur une ligne droite dans des sens vers l'avant et vers l'arrière du transport et ayant une surface inférieure adaptée à venir en contact avec les cylindres (50) de transport,
l'élément de berceau (10) a, en quatre positions, des parties (22) de transmission de charge avant et arrière sur les deux des côtés gauche et droit sur une surface inférieure configurées pour transmettre une charge agissant sur l'élément de berceau (10) vers l'élément de patin (30), les parties (22) de transmission de charge avant étant disposées sur le patin divisé avant (32a), les parties (22) de transmission de charge arrière étant disposées sur le patin divisé arrière (32b),
chacun des patins divisés (32a, 32b) a un élément (38) de support de charge configuré pour supporter la charge transmise depuis la partie (22) de transmission de charge,
**caractérisée en ce qu'**une partie en renfoncement (40) formée en une position sur la surface inférieure du longeron (36a, 36b) correspondant à l'élément (38) de support de charge.

2. Palette (1) de transport selon la revendication 1, dans laquelle un(e) de la partie (22) de transmission de charge et de l'élément (38) de support de charge est formé(e) comme une partie convexe semi-cylindrique s'étendant dans des sens gauche et droit de la palette (1) de transport, un(e) autre est formé(e) comme une partie concave ayant une surface intérieure semi-cylindrique d'une forme correspondant à une surface extérieure semi-cylindrique de la partie convexe, et la surface extérieure semi-cylindrique de la partie convexe et la surface intérieure semi-cylindrique de la partie concave sont aptes à glisser relativement dans des sens avant et arrière de la palette (1) de transport tout en conservant une relation mutuellement opposée.

3. Palette (1) de transport selon la revendication 1 ou 2, dans laquelle au moins un(e) de la partie (22) de transmission de charge et de l'élément (38) de support de charge est configuré(e) comme un élément séparé remplaçable.

4. Palette (1) de transport selon la revendication 1, 2 ou 3, dans laquelle la partie de surface inférieure (42a, 42b) du longeron (36a, 36b) est constituée d'un élément (44) de chemise remplaçable.

5. Palette (1) de transport selon la revendication 4, dans laquelle l'élément (44) de chemise est composé de deux chemises divisées (48) divisées et agencées à l'avant et à l'arrière sur la partie de surface inférieure (42a, 42b) du longeron (36a, 36b), à l'exclusion de la position de la partie en renfoncement (40).

6. Palette (1) de transport selon l'une quelconque des revendications 1 à 5, dans laquelle la palette (1) de transport comprend en outre un élément (49) d'accouplement configuré pour accoupler de façon lâche l'élément de berceau (10) et l'élément de patin (30) ensemble de telle manière que, lorsque l'élément de berceau (10) est levé, l'élément de berceau (10) et l'élément de patin (30) sont levés de façon intégrée avec un espace entre l'élément de berceau (10) et l'élément de patin (30).

7. Palette (1) de transport selon l'une quelconque des revendications 1 à 6, dans laquelle
les deux patins divisés (32a, 32b) incluent en outre quatre parties étendues (41) qui font respectivement saillie et s'étendent depuis des côtés gauche et droit de l'élément de patin (30) et depuis des extrémités avant et arrière de l'élément de berceau (10), et
chacune des parties étendues (41) a une matière (43) d'isolation thermique au moins sur une surface supérieure.

8. Palette (1) de transport selon l'une quelconque des revendications 1 à 7, dans laquelle les deux bords d'extrémité dans la partie en renfoncement (40) sont chanfreinés.

9. Système incluant une palette (1) de transport selon l'une quelconque des revendications 1 à 8 et ladite pluralité de cylindres (50) de transport alignés et agencés en parallèle audit pas (A) d'agencement prédéterminé.

10. Système selon la revendication 9, dans lequel des dimensions d'extension de deux parties de surface inférieure (42a, 42b) du longeron (36a, 36b) séparées à l'avant et à l'arrière par la partie en renfoncement (40) sont toutes les deux plus grandes que le pas d'agencement de la pluralité de cylindres (50) de transport.
